# EUROPEAN PATENT SPECIFICATION

(11) **EP 2 693 861 B1**
(45) Date of publication and mention of the grant of the patent: **18.01.2017**
(21) Application number: 12718032.1
(22) Date of filing: 28.03.2012
(51) Int. Cl.: A01B 21/08, A01B 25/00

(54) **SOIL TREATMENT MACHINE**
ERDBODENBEHANDLUNGSMASCHINE
MACHINE DE TRAITEMENT DE SOL

(30) Priority: 04.04.2011 CZ 20110187
(43) Date of publication of application: 12.02.2014
(73) Proprietor: Farmet A.S., 55203 Ceská Skalice (CZ)
(72) Inventor: NYC, Michal, 54941 Cervený Kostelec (CZ)
(74) Representative: Skoda, Milan
(86) International application number: PCT/CZ2012/000028
(87) International publication number: WO 2012/136173

(56) References cited:
- WO-A1-00/74464
- WO-A1-02/19792
- WO-A2-2005/077139
- AT-U1- 10 248
- FR-A1- 2 851 121
- US-A- 5 289 879

## Description

### Technical Field

The invention relates to a soil treatment machine, in particular the machine including at least two transverse rows of concave plates with deflection boards situated behind them in driving direction.

### Background Art

There are currently many soil treatment machines on the market, with independently fitted plates in two usually parallel rows perpendicular to driving direction. Concaved plates are in each row fitted on independent brackets, where plate planes usually form an open angle with the soil surface, while two basic technical solutions can be distinguished. Concaved plates are pivotally attached to brackets with their convex or concave side. Each of the solutions mentioned offers certain advantages and disadvantages. If the concaved plates are attached to brackets with their convex side, the machine with given plate diameters achieves less operating depth, which can be considered a disadvantage. The advantage on the contrary is that the bearings of plates are with respect to the plate angle protected, mainly in the rear row of plates, against the soil flying off from the front plates, which reduces demands on the technical solution of sealing and increases durability of plate bearings in the rear row.

There is also another solution noted, under which the plates are attached to brackets by their concave side. The advantage of this technical solution is that greater operating depth can be achieved with given plate diameters. Its disadvantage is that plate bearings, mainly in the rear row of plates, are exposed to direct soil flow flying off from the front row of plates. This essentially increases mechanical stress of bearing seals and reduces their durability. On that score, deflection devices are used that regulate the soil flow flying off from plates, mainly between the first and second row of plates, so that the stress of bearing seals of the second row of disks is reduced. Another reason for using deflection devices is their positive impact on the soil treatment quality, breaking clods, and ground levelling. From this point of view it is beneficial to use deflection devices behind both plate rows. The disadvantage of deflection devices is certain reduction of material throughput (soil and plant residues) between the first and second plate row, and also increased risk of soil sticking on deflection devices and possible machine jams.

The patent WO 2005/077139 describes a deflection device, which by its structure reduces mentioned risks and which is suitable for use in machines with concave plate attachment, where it provides sufficient protection of bearings of the second row of concaved plates. Neither this solution however removes the problem of reduced throughput for the soil and plant residues and certain risk of sticking and clogging under worse soil conditions.

The interesting solution is shown in the patent EP 1 300 060 that as a deflection device uses flexible tips similar to tips of light harrows. The advantage of this solution is a great throughput for the soil and plant residues and practically low risk of sticking and clogging. By its structure, this deflection device is however suitable for machines with convex plate attachment, since it does not provide sufficient protection of bearings in the second row of plates against soil flying off from the first row of plates. According to practical experience, this deflection device has many disadvantages. For good functionality of the device and to achieve higher operating speed of the machine, it is usually necessary to set the tips of the deflection device to a position at the maximum distance form the row of plates, which are to regulate the soil flow behind. With this setup, tip ends of the deflection device will get to a close distance of the second raw of plates, mainly behind the first row of plates with respect to their density. Due to soil and stones striking the flexible tips, they deflect significantly and subsequently collide with the rear row of plates. In practice, it causes frequent damage to deflection device tips and their optimal setup cannot be always achieved, or at the price of the risk of damage only. Another considerable disadvantage of this solution is its relatively higher technical complicacy, higher production demands, and higher factory price.

It is apparent from the state of the art mentioned, that the current state shows many disadvantages.

The objective of the invention is a structure of the soil treatment machine that will eliminate disadvantages above.

### Disclosure of the Invention

Disadvantages mentioned are to a great extent eliminated and objectives are met with the soil treatment machine, mainly the machine including at least two rows of concaved plates installed in series on the connecting frame, while concaved plates are positioned sideways to driving direction, i.e. concaved plates of the first raw are directed forward to one side, sideways to driving direction, and concaved plates of the second raw are directed forward to the other side, sideways to driving direction, and individual concaved plates in each raw are situated beside each other on independent support arms, which they are loosely and pivotally coupled with, and there is at least one deflection board behind at least one row of concaved plates in its entire operating width, according to the invention, the merit of which is that the deflection board is formed as compact and solid, provided with cuts on its bottom side in the machine width direction, and these cuts go up to min. 50% of its height, and the area ratio of cuts against the total area of the deflection board up to the height of cuts is greater than 55%, and the cuts of the deflection board have conic, rectangular, semicircular, half-oval, parabolic or trapezoid shape, or combination of those, and the deflection board is sectional, and the width of individual sections corresponds with the operating width of individual machine sections that are foldable for transport purposes, and least one of the deflection boards is connected with a roller providing its depth guidance.

Deflection boards are situated so that part of the soil flying off from concaved plates strikes the boards; the soil crumbles and its flow is more even. Cuts in boards are large enough to avoid undesired sticking of the soil or clogging, and they are made from the material with relatively low flexibility such as steel or solid rigid plastic. Arrangement of deflection boards according to the innovation is beneficial for use in both, machines with swivel attachment of concaved plates on their concave side, where the bearings in the rear raw of plates can be threatened by excessive stress caused by soil flying off from the front plates, and machines with swivel attachment of concaved plates on their convex side. It is beneficial, if at least one of the deflection boards is connected with a roller ensuring its depth guidance, and this roller ensures accurate altitudinal guidance of deflection boards against the soil surface.

It is also beneficial, if the deflection board is attached directly to the connecting frame or the cross bar that is fixed to the connecting frame or directly to the frame of the rear compacting and copying device, or it is attached to the connecting frame, cross bars, frame of the rear compacting and copying device using at least one fixture or using an inserted frame.

The deflection board is preferably flat or curved. Its curve improves regulation of the soil flow and also increases the overall rigidity of the deflection board.

It is beneficial, if part of the board with cuts forms an angle (α) with the soil surface from 0 to 120°, which again optimizes the soil flow.

It is also beneficial, if the attachment of the deflection board to the connecting frame or the cross bar or to the frame of the rear compacting and copying device is adjustable. This allows adjust optimally the position of the deflection board with respect to soil conditions.

The deflection board is sectional, when the width of individual sections corresponds with the operating width of individual machine sections foldable for transport purposes. This version enables easier and safer transport of the whole machine for soil treatment on public roads.

For optimum functionality of the soil treatment machine it is beneficial if the support arms of concaved plates are fitted with flexible components enabling individual adjustment of the operating depth of each concaved plate or providing fixed position of concaved plates by its initial stress, and in case of overload they allow deflection of plates upwards and backwards.

The deflection plate under the innovation is rigid and inflexible, preferably made from hardened steel. High rigidity of the deflection board improves significantly the effect of crushing the clods flying off from plates and striking deflection boards. High rigidity of the deflection board also enables its positioning at the maximum distance behind previous row of concaved plates, to the close distance of the next row of concaved plates or the roller, without the risk of mutual collision and damage. This can significantly increase the operating speed of the machine and reduce the risk of clogging. The deflection board might be located high enough under the soil surface and at the sufficient distance from the previous raw of concaved plates, so the risk of its damage by large stone or other solid barrier from the previous raw of concaved plates is significantly eliminated. On that score, the deflection device does not have to be equipped with any safeguard against overload.

### Review of figures in the drawing

The innovation will be explained better using a drawing, in which Fig. 1 shows the soil treatment machine in an axonometric view, Fig. 2 shows the soil treatment machine in a side view, Fig. 3 shows a detail view of deflection board attachment, and Fig. 4 shows a detail view of the deflection board.

### Description of example

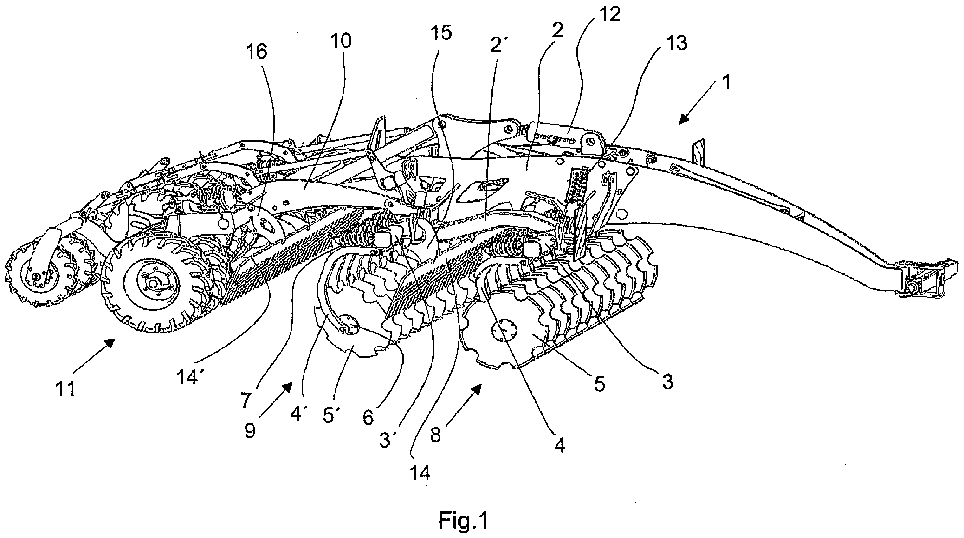

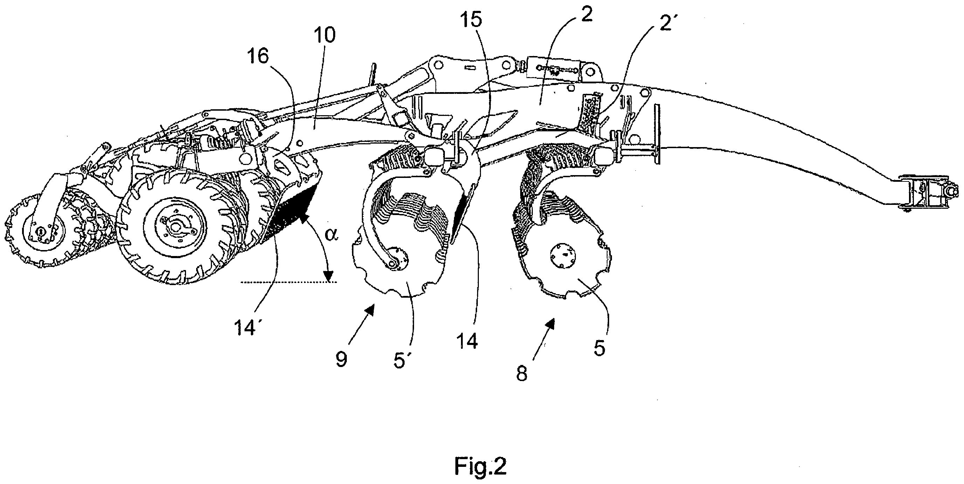

Soil treatment machine 1 (Fig. 1, Fig. 2) is equipped with a connecting frame 2,2' with cross bars 3,3'. On cross bars, independent arms 4,4' are pivoted, on which individual concaved plates 5,5' are pivoted. Swivel attachment of plates is formed by bearing 6. Concaved plates 5, 5' are maintained in required operating position using flexible components 7. According to rigidity of flexible components, concaved plates 5,5' can be fixed firmly in the required position or oscillate smoothly according to the resistance of the soil treated.

The soil treatment machine includes two transverse rows 8,9 of concaved plates 5,5', mounted in series and installed on the connecting frame 2,2'. The front section of the soil treatment machine 1, contains concaved plates 5 of the front row 8 of concaved plates 5. Concaved plates of the front row are situated sideways to driving direction and directed by their concave surfaces to the right in driving direction. The rear section of the soil treatment machine 1 includes concaved plates 5' of the rear row 9 of concaved plates 5'. Concaved plates 5' of the rear row 9 are situated sideways to driving direction and directed by their concave surfaces to the left in driving direction.

The connecting frame 2,2' is pivotally attached to the frame 10 of the rear compacting and copying device 11. This device is designed as a roller consisting of two rows of tires, or as a ramming roller. Mutual position of the connecting frame 2,2' and the frame 10 of the rear compacting and copying device can be adjusted using a hydraulic cylinder 12 and adjustable retainers 13. Using adjustable retainers 13, appropriate position of the connecting frame 2,2' and the frame 10 can be set for the operating position of the machine and thus achieve accurate depth guidance of the front row 8 of concaved plates 5 and the rear row 9 of concaved plates 5'. The rear compacting and copying device 11 enables machine transport on public roads after hydraulic cylinder 12 release.

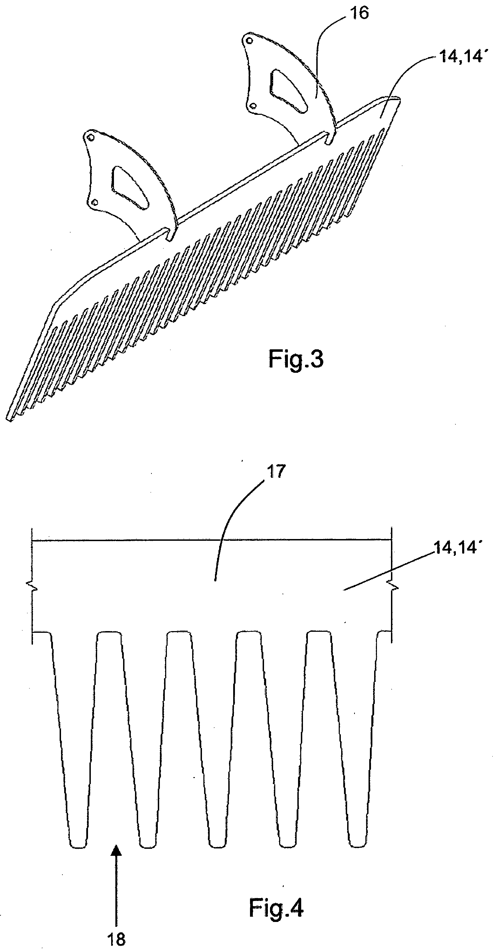

Behind each row 8,9 of concaved plates 5,5', there is one deflection board 14,14' situated in its entire operating width (Fig. 3, Fig. 4) that is formed as compact and solid, provided with parallel cuts 18 on the bottom side in the direction of the machine width 18 that reach min. up to 66 % of its height, and the area ratio cuts 18 and the total deflection board 14,14' area up to the height of cuts 18 is higher than 55%.

Cuts 18 in the deflection board 14,14' (Fig. 4) have conic shape, alternatively trapezoid, rectangular, semicircular, half-oval, parabolic shape, or combination of those shapes.

First deflection board 14 (Fig. 1, Fig. 2) is by two fixtures 15 attached in its upper section 17 to the cross bar 3,3'.

Second deflection board 14' (Fig. 1, Fig. 2) is by two fixtures 16, attached in its upper section 17 to the frame 10 of the rear compacting and copying device 11.

Alternatively, deflection boards 14,14' might be attached directly to the connecting frame 2,2' or the cross bar 3,3' that is fixed to the connecting frame 2,2' or directly to the frame 10 of the rear compacting and copying device 11, or they might be attached to the connecting frame 2,2', cross bar 3,3', frame 10 of the rear compacting and copying device 11 using an inserted frame not shown here.

Alternatively, the attachment of deflection boards 14,14' to the connecting frame 2,2' or the cross bar 3,3' or the frame 10 of the rear compacting and copying device 11 might be adjustable.

Deflection boards 14,14' are flat. Alternatively, they might be curved. Part of the deflection bards 14,14' with cuts 18 forms an angle (α) with the soil surface of 80°.

At least one of the deflection boards 14,14' is connected with the roller providing its depth guidance (not shown).

Deflection board 14,14' might be alternatively sectional, and the length of individual sections corresponds with the operating width of individual sections of the machine that are foldable for transport purposes.

The support arms 4,4' of concaved plates 5,5' are provided with flexible components 7 enabling individual adjustment of the operating depth of each concaved plate; or by their initial stress they ensure the position of concaved plates and in case of overload enable deflection of plates upwards and backwards.

### Industrial applicability

The soil treatment machine under the innovation can be used for highly efficient soil treatment.

### List of Reference Marks

- 1: Soil treatment machine
- 2,2': Connecting frame
- 3,3': Cross bar
- 4,4': Independent arm
- 5,5': Concaved plate
- 6: Bearing
- 7: Flexible component
- 8: Row I
- 9: Row II
- 10: Frame
- 11: Compacting and copying device
- 12: Hydraulic cylinder
- 13: Adjustable retainer
- 14,14': Deflection board
- 15: Fixture I
- 16: Fixture II
- 17: Upper section
- 18: Cutout

## Claims

1. A soil treatment machine includes two transverse rows (8,9) of concaved plates (5,5') mounted in series and installed on a connecting frame (2,2'), while the concaved plates (5,5') of the first row (8) are situated sideways forwards and directed to one side and concaved plates (5') of the second row (9) are situated sideways forwards and directed to the other side, and individual concaved plates (5,5') in each row (8,9) are situated in parallel on independent support arms (4,4'), to which they are loosely and pivotally connected to by bearings, and there is a deflection board (14,14') situated behind at least one of the rows (8,9) of concaved plates (5,5'), and this deflection board (14,14') is formed as compact and solid, while on its bottom side it is provided with cuts (18) in the machine width direction, and these cuts (18) go up to minimally 50% of its height, **characterised by** the fact that the area ratio of cuts (18) against the total area of the deflection board (14,14') up to the height of cuts (18) is greater than 55%, and the cuts (18) of the deflection board (14,14') have conic, rectangular, semicircular, half-oval, parabolic or trapezoid shape, or combination of those, and the deflection board (14,14') is sectional, and the width of individual sections corresponds with the operating width of individual machine sections that are foldable for transport purposes, and at least one of the deflection boards (14,14') is connected with a roller providing its depth guidance.

2. The soil treatment machine under the claim 1 **characterized by the fact** that the deflection board (14,14') is attached directly to the connecting frame (2,2') or the cross bar (3,3'), which is attached to the connecting frame (2,2') or directly to a frame (10) of the rear compacting and copying device (11), or it is attached to the connecting frame (2,2') or the cross bar (3,3'), to the frame (10) of the rear compacting and copying device (11) using at least one fixture (15,16) or using an inserted frame.

3. The soil treatment machine under any previous claim **characterized by the fact** that the deflection board (14,14') is flat or curved.

4. The soil treatment machine under any previous claim **characterized by the fact** that part of the deflection board (14,14') with cuts (18) forms an angle (α) with the soil surface from 0° to 120°.

5. The soil treatment machine under any previous claim **characterized by the fact** that the attachment of the deflection board (14,14') to the connecting frame (2,2') or the cross bar (3,3'), or the frame (10) of the rear compacting and copying device is adjustable.

6. The soil treatment machine under any previous claim **characterized by the fact** that support arms (4,4') of concaved plates (5,5') are provided with flexible components (7) enabling individual permitted accommodation of the operating depth of each concaved plate, or by their initial stress provide fixed position of concaved plates, and in case of overload enable deflection of concaved plates upwards and backwards.

## Patentansprüche

1. Die Erdbodenbehandlungsmaschine enthält mindestens zwei hintereinander schräg zum Boden gerichteten Reihen (8,9) von konkaven Tellern (5,5') mit Anbringung am Verbindungsrahmen (2,2'), wobei die konkaven Teller (5,5') schräg zur Fahrrichtung so ausgerichtet sind, dass die konkaven Teller (5) der einen Reihe (8) schräg nach vorn in eine Seite und die konkaven Teller (5') der zweiten Reihe (9) schräg in die andere Seite ausgerichtet sind, wobei die einzelnen konkaven Teller (5,5'), in jeder der Reihen (8,9), nebeneinander auf selbständigen Tragarmen (4,4') angebracht sind, mit denen sie frei auf Lagern drehbar verbunden sind, wobei hinter mindestens einer der Reihen (8,9) von konkaven Tellern (5,5') sich in deren ganzen Arbeitsbreite mindestens eine Deflektionsplatte (14,14') befindet, die als kompakt und fest ist, wobei sie auf ihrer Unterseite in Richtung der ganzen Maschinenbreite nebeneinander liegende Ausschnitte (18) enthält, die min. bis in die 50% von deren Höhe reichen, **dadurch gekennzeichnet, dass** das Verhältnis der Fläche von Ausschnitten (18) im Vergleich zur Gesamtfläche der Deflektionsplatte (14,14') bis in die Höhe von Ausschnitten (18) größer als 55% ist, und die Ausschnitte (18) der Deflektionsplatte (14,14') eine konische, rechteckige, halbrunde, halbovale, parabolische oder Trapezform haben, oder eine Form, die eine Kombination von solchen Formen darstellt, und die Deflektonsplatte (14,14') geteilt ist, und die Breite einzelner Teile der Arbeitsbreite einzelner Maschinensektionen entspricht, die zwecks Transport zusammenklappbar sind, und mindestens eine der Deflektionsplatten (14,14') mit der Rolle verbunden ist, mit der die Tiefenführung sichergestellt wird.

2. Die Erdbodenbehandlungsmaschine, nach der Forderung 1, **dadurch gekennzeichnet, dass** die Deflektionsplatte (14,14') an den Verbindungsrahmen (2,2') direkt befestigt ist, oder direkt an den Querträger (3,3'), der an den Verbindungsrahmen (2,2') direkt befestigt ist, oder direkt an den Rahmen (10) der Festigungs- und Nachformungsanlage (11) oder an den Verbindungsrahmen (2,2'), den Querträger (3,3'), den Rahmen (10) der hinteren Festigungs- und Nachformungsanlage (11) mittel mindestens einer Halterung (15,16) oder mittels eingefügten Rahmens befestigt ist.

3. Die Erdbodenbehandlungsmaschine, nach einer der vorherigen Anforderungen, **dadurch gekennzeichnet, dass** die Deflektionsplatte (14,14') gerade oder gebogen ist.

4. Die Erdbodenbehandlungsmaschine, nach einer der vorherigen Anforderungen, **dadurch gekennzeichnet, dass** ein Teil der Deflektionsplatte (14,14'), die Ausschnitte (18) enthält, mit der Bodenoberfläche einen Winkel (α) im Ausmaß von 0° bis 120° bildet.

5. Die Erdbodenbehandlungsmaschine, nach einer der vorherigen Anforderungen, **dadurch gekennzeichnet, dass** die Deflektionsplatte (14,14') an den Verbindungsrahmen (2,2'), oder den Querträger (3,3'), oder den Rahmen (10) der Festigungs- und Nachformungsanlage (11) einstellbar befestigt wird.

6. Die Erdbodenbehandlungsmaschine, nach einer der vorherigen Anforderungen, **dadurch gekennzeichnet, dass** die Tragarme (4,4') der konkaven Teller (5,5') mit biegeelastischen Elemente (7) versehen sind, die eine individuell zulässige Anpassung der Arbeitstiefe eines jeden konkaven Tellers ermöglichen, oder durch ihre Vorspannung eine fixe Lage der konkaven Teller sicherstellen und für den Fall einer Überlastung das Ausschwenken nach oben und nach hinten ermöglichen.

## Revendications

1. La machine de traitement de sol comportant au moins deux rangées des disques concaves (5,5'), placées de suite au travers (8,9), mises au châssis de jonction (2,2'), et en même temps les disques concaves (5,5') sont dirigés à travers du sens de la marche de façon que les disques concaves (5) d'une rangée (8) se dirigent obliquement en avant à une côté et les disques concaves (5') de l'autre rangée (9) se dirigent obliquement en avant à l'autre côté, les disques concaves (5,5') dans chaque rangée (8,9) sont placés un à coté de l'autre à des bras porteurs individuels (4,4'), auxquels ils sont fixés par les paliers qu'ils puisse pivoter librement, en même temps, derrière au moins d'une des rangées (8,9) des disques concaves (5,5'), il y a, dans toute largeur de travail, au moins un panneau de déflexion (14,14') qui est formé en tant que compacte et solide, il est pourvu, sur son côté inférieur, dans le sens de la largeur de la machine, des encoches placés parallèlement (18) qui atteignent à 50 % au moins da sa hauteur, **caractérisé en ce que,** le prorata des surfaces des encoches (18) vis-à-vis de la surface totale du panneau de déflexion (14,14') jusqu'à la hauteur des encoches (18) est plus de 55 %, et les encoches (18) du panneau de déflexion (14,14') ont la forme conique, rectangulaire, en demi-cercle, demi ovale, parabolique ou trapézoïdale, ou ils ont une forme qui est combinaison de ces formes, et le panneau de déflexion (14,14') est divisé, et la largeur de diverses parties corresponde à la largeur de travail de diverses sections de la machine que l'on peut plier pour le transport, et au moins un des panneaux de déflexion (14,14') est joint au rouleau qui assure sa conduite de profondeur.

2. La machine de traitement de sol, conformément à la revendication 1, **caractérisé en ce que,** le panneau de déflexion (14,14') est fixé directement au châssis de jonction (2,2'), ou directement au support de travers (3,3') qui est fixé au châssis de jonction (2,2'), ou directement au châssis (10) du dispositif arrière à compacter et à copier (11), ou il est fixé au châssis de jonction (2,2'), au support de travers (3,3'), au châssis (10) du dispositif arrière à compacter et à copier (11) à l'aide d'une prise (15,16) au moins ou à l'aide du châssis inséré.

3. La machine de traitement de sol, conformément à une des revendications précédentes, **caractérisé en ce que,** le panneau de déflexion (14,14') est plat ou courbé.

4. La machine de traitement de sol, conformément à une des revendications précédentes, **caractérisé en ce que,** qu'une partie du panneau de déflexion (14,14'), contenant des encoches (18), fait, avec la surface du sol, l'angle (α) de 0 jusqu'à 120°.

5. La machine de traitement de sol, conformément à une des revendications précédentes, **caractérisé en ce que,** le panneau de déflexion (14,14') est fixé de manière réglable au châssis de jonction (2,2'), ou au support de travers (3,3'), ou au châssis (10) du dispositif arrière à compacter et à copier (11).

6. La machine de traitement de sol, conformément à une des revendications précédentes, **caractérisé en ce que,** les bras porteurs (4,4') des disques concaves (5,5') sont pourvus des éléments souples (7) qui permettent l'adaptation individuelle permise du profondeur de travail de chaque disque concaves ou ils assurent par leur précontrainte la position fixe des disques concaves et dans le cas de la surcharge, ils permettent la déviation des disques concaves dans la direction en haut et en arrière.
